# EUROPEAN PATENT APPLICATION

(11) **EP 1 349 361 A2**
(43) Date of publication of application: **01.10.2003**
(21) Application number: 02257330.7
(22) Date of filing: 22.10.2002
(51) Int. Cl.: H04N 1/00

(54) **Image data processing system**

(30) Priority: 26.02.2002 JP 2002049350
(71) Applicant: FUJITSU LIMITED, Kawasaki-shi, Kanagawa 211-8588 (JP)
(72) Inventor: Chiba, Hirotaka, Fujitsu Limited, Kawasaki-shi, Kanagawa 211-8588 (JP); Noda, Tsugio, Fujitsu Limited, Kawasaki-shi, Kanagawa 211-8588 (JP)
(74) Representative: Hitching, Peter Matthew

(57) **Abstract**

A system is disclosed which performs complicated processing at high speed on image data which is obtained by a camera-equipped mobile phone, thereby reducing the time required for image data processing. The system includes first equipment (10) and second equipment (20), communicably interconnected each other with a first communication path (41). The first equipment (10) includes: an image inputting unit (11) for obtaining image information in the form of image data; and an image data transmitting unit (12) for transmitting the image data, which has been obtained by said image inputting unit (11), to said second equipment (20) over said first communication path (41) . The second equipment (20) includes: an image data receiving unit (21) for receiving the image data, which has been transmitted over said first communication path (41), from said first equipment (10); and an image data processing unit (22) for processing the image data, which has been obtained by said image data receiving unit (21) .

## Description

The present invention relates to a system and a server for processing image data that is obtained with a device, such as a camera-equipped mobile phone, having a function for inputting picture images.

With increasing Internet access through mobile phones, there have recently been developed many Internet-enabled mobile phones equipped with image inputting devices, such as a camera and a scanner. Using such a type of mobile phone, a user takes a picture image, and then transmits the thus obtained image data to other mobile phones or to personal computers over a communications network such as the Internet.

At that time, users sometimes wish to make some processing on such image data obtained with a mobile phone, and for realizing this, there have been developed mobile phones having an image data processing function.

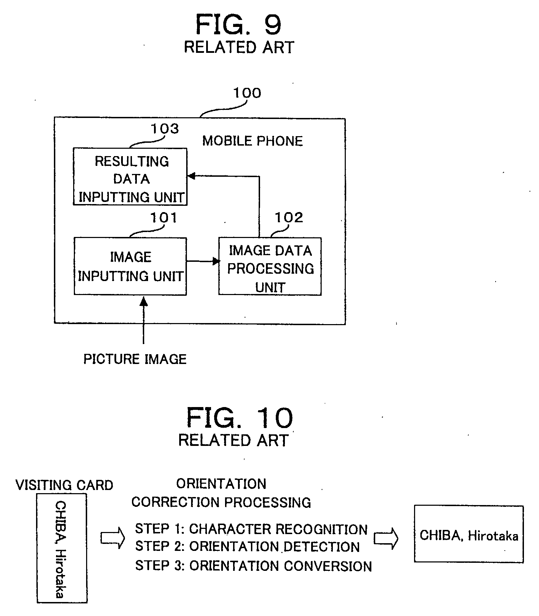

FIG. 9 shows an example of functional structure of a mobile phone equipped with an image inputting and image data processing functions. Referring now to FIG. 9, in addition to its essential function of making a call, the mobile phone 100 also has an image inputting unit 101, an image data processing unit 102, and a resulting data inputting unit 103, which serve as the forgoing image inputting function and image processing function.

The image inputting unit 101 is an image inputting device such as a camera and a scanner, and it obtains/scans, for example, a document image, and then inputs image data of the document image to the image data processing unit 102, thus taking the image data into the mobile phone 100.

Here, the image data processing unit 102 serves a image processing function which is disclosed, for example, in Japanese Patent Application Publication No. HEI 11-316798, *"Image Condition Detecting Apparatus and Document Image Correcting Apparatus Utilizing the Same."* In the example of FIG. 10, the image data processing unit 102 corrects the orientation of image data input from the image inputting unit 101. More precisely, the image data processing unit 102 recognizes characters contained in an object image data which has been obtained by the image inputting unit 101 (step 1); detects the directional orientation of the recognized characters (step 2); and converts/corrects the orientation of the character image to comply with the user's intention (step 3).

If the image inputting unit 101 of the mobile phone 100 takes a picture image of a rectangular visiting card (on which characters are printed horizontally), such image data as is shown in the left end of FIG. 10 is resultantly obtained. With the foregoing orientation correction processing (steps 1 through 3), the image data of the visiting card is automatically converted into an erect image, as shown on the right end of FIG. 10.

Note that the functions of the image data processing unit 102 are actually realized by an MPU (Micro Processing Unit) built in the mobile phone 100.

After that, a resulting data inputting unit 103 writes/inputs the image data, which is the result of the processing by the image data processing unit 102, to a memory (not shown) or the like.

Generally speaking, image data processing requires a comparatively high-ability MPU. A mobile phone 100 has an MPU that essentially aims at handling incoming and outgoing calls, and the image processing is performed by utilizing the computing power of the MPU at intervals between the occurrences of the handling of the calls.

Such image data processing carried out by the MPU will cause the following disadvantages: if a big-screen image is input from the image inputting unit 101, or if complicated processing is performed on obtained image data, it takes the MPU an increased time duration, so that considerable time is required to complete the image data processing.

It is therefore desirable to be able to perform complicated processing at high speed on image data which is obtained by a camera-equip mobile phone or the like, thereby reducing the time required for image data processing.

According to the present invention, there is provided an image dataprocessing system, comprisingfirst equipment and second equipment, communicably interconnected with each other via a first communication path. The first equipment includes: an image inputting unit for obtaining image information in the form of image data; and an image data transmitting unit for transmitting the image data, which has been obtained by the image inputting unit, to the second equipment over the first communication path. The second equipment includes: an image data receiving unit for receiving the image data, which has been transmitted over the first communication path, from the first equipment; and an image data processing unit for processing the image data, which has been obtained by the image data receiving unit.

As a preferred feature, the second equipment further includes a processed image data transmitting unit for transmitting such processed image data, which has been processed by the image data processing unit, to the first equipment over the first communication path, while the first equipment further includes a processed image data receiving unit for receiving the processes image data, which has bee transmitted over the first communication path, from the second equipment.

As another preferred feature, the image data processing system further comprises third equipment, communicably connected with the second equipment via a second communication path. The second equipment further includes a processed image data transmitting unit for transmitting such processed image data, which has been processed by the image data processing unit, to the third equipment over the second communication path, while the third equipment includes a processed image data receiving unit for receiving the processed image data, which has been transmitted over the second communication path, from the second equipment.

As still another preferred feature, the first equipment further includes a preprocessing unit for performing preprocessing on the image data, which has been obtained by the image inputting unit, before the image data is processed by the image data processing unit, and the image data transmitting unit of the first equipment transmits the image data, which has been obtained by the image inputting unit and then preprocessed by the preprocessing unit, to the second equipment over the first communication path. At that time, for example, the preprocessing unit may remove an isolated spot on the image data, as the preprocessing.

As a further preferred feature, the image data transmitting unit of the first equipment serves a function for compressing the image data to be transmitted to the second equipment, and the image data receiving unit of the second equipment serves a function for restoring the compressed image data, which has been received from the first equipment over the first communication path, to its original form. Likewise, the processed image data transmitting unit of the second equipment serves a function for compressing the processed image data, and the processed image data receiving unit of the first equipment serves a function for restoring the compressed image data, which has been received from the second equipment over the first communication path, to its original form. Moreover, the processed image data transmitting unit of the second equipment serves a function for compressing the processed image data, and the processed image data receiving unit of the third equipment serves a function for restoring the compressed image data, which has been received from the second equipment over the second communication path, to its original form.

As a still further preferred feature, the image data processing unit corrects a directional orientation of the image data, as its processing, if the image data contains a character. Further, the first equipment may be a mobile phone having an image inputting function which serves as the image inputting section.

As a generic feature of the present invention, there is provided an image processing server, communicably connected with a mobile phone which is equipped with an image inputting unit. The server comprises: an image data receiving unit for receiving image data from the image inputting unit of the mobile phone; and an image data processing unit for processing the image data, which has been obtained by the image data receiving unit. As a preferred feature, the image processing server further comprises a processed image data transmitting unit for transmitting such processed image data, which has been processed by the image data processing unit, to the mobile phone. As another preferred feature, the server further comprises a processed image data transmitting unit for transmitting such processed image data, which has been processed by the image data processing unit, to terminal equipment other than the mobile phone. As still another preferred feature, the image data processing unit corrects a directional orientation of the image data, as its processing, if the image data contains a character.

The image data processing system and server of the present invention guarantee the following advantageous results.

Image data obtained by first equipment, such as a camera-equipped mobile phone, is transmitted to second equipment, such as an image processing server, and this second equipment then performs predetermined processing (for example, correcting the orientation of an object character image) on the image data. With this construction, the image data obtained by the first equipment with poor ability is transferred to the second equipment with high ability, where the image data is then processed. In this manner, since the second equipment takes in charge of time-consuming image data processing, which would have taken the first equipment a significant time to complete, it is possible to perform even complicated image data processing at increased speed, thereby reducing the time required for such processing.

Further, the image data (processed image data), on which the second equipment has performed complicated image data processing, is returned to the first equipment. In this case, it is possible for the first equipment to obtain such processed image data more rapidly, even taking into account the time for communicating with the second equipment, in comparison with a case where the first equipment executes such processing by itself . As a result, the camera-equipped mobile phone is significantly improved in user convenience.

Still further, the processed image data can be transferred from the second equipment to the third equipment. With this construction, if the user of the first equipment wishes to direct the processed image data to the third equipment, it is possible to send the image data from the second to the third equipment directly, without necessity for the first equipment to interpose between the second and the third equipment, by receiving the image data from the second equipment and then transmitting the image data to the third equipment. Accordingly, the process of transceiving processed image data is successfully simplified, and it is thus possible to transmit the processed image data to the third equipment at an increased rate, so that user convenience is successfully improved.

At that time, before sending out image data which is to be processed on the second equipment, the first equipment executes preprocessing (rather light-load processing: for example, removing isolated spots) on the image data. With this construction, it is possible to reduce the load of image data processing onto the second equipment. In particular, even if numerous requests for image data processing are concentrated at the second equipment, it is possible to effectively reduce/lighten the load on the second equipment, thereby speeding up the processing of the second equipment.

Moreover, partly since image data to be processed is transmitted from the first equipment to the second equipment in compressed form, and partly since image data having been processed is transmitted from the second equipment to the first or the third equipment also in compressed form, it is possible to reduce the amount of data transmitted between the first equipment and the second equipment, and between the second equipment and the third equipment, so that the time required for communication therebetween can be reduced, thereby improving user convenience.

Preferred features of the present invention will now be described, purely by way of example, with reference to the accompanying drawings, in which:-
FIG. 1 is a block diagram schematically showing an image data processing system of a first embodiment of the present invention;
FIG. 2 is a view for describing operation of the image data processing system of the first embodiment of the present invention;
FIG. 3 is a block diagram schematically showing an image data processing system of a second embodiment of the present invention;
FIG. 4 is a view for describing operation of the image data processing system of the second embodiment of the present invention;
FIG. 5 is a block diagram schematically showing first equipment (a mobile phone) in an image data processing system of a third embodiment of the present invention;
FIG. 6 is a view for describing operation of the image data processing system of the third embodiment of the present invention;
FIG. 7 is a block diagram schematically showing an image data processing system of a fourth embodiment of the present invention;
FIG. 8 is a view for describing operation of the image data processing system of the fourth embodiment of the present invention;
FIG. 9 is a block diagram of an example of a mobile phone equipped with an image inputting function and an image data processing function; and
FIG. 10 is a view for describing directional orientation correction (image data processing) performed by an image data processing unit of FIG. 9.

Embodiments of the present invention will now be described with reference to the relevant accompanying drawings.

### [1] First Embodiment:

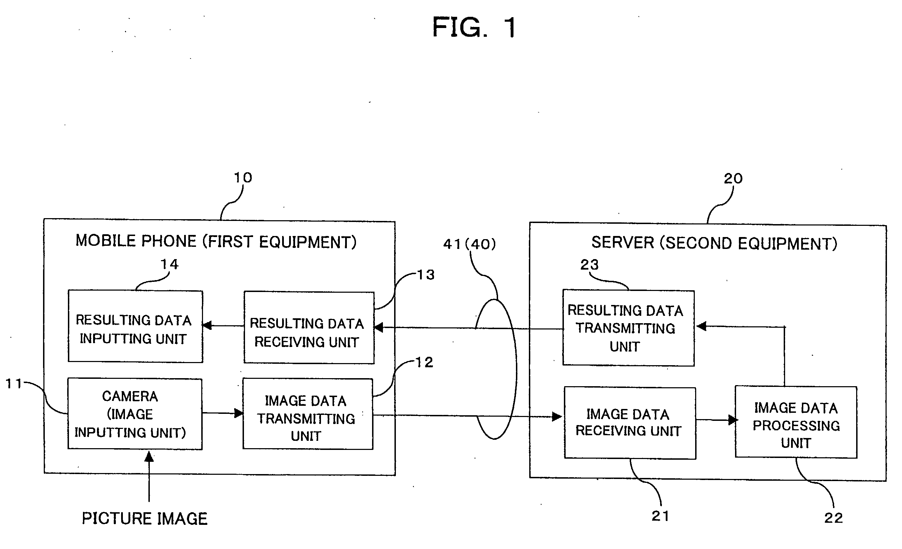

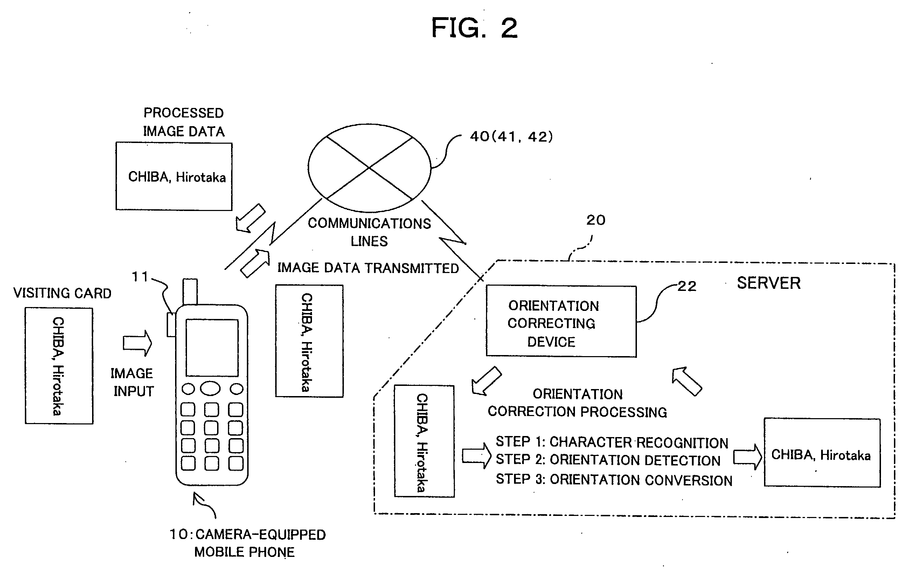

FIG. 1 shows a functional structure of an image data processing system according to a first embodiment of the present invention. As shown in FIG. 1, the image data processing system of the first embodiment has a mobile phone 10, an image processing server (hereinafter also simply called "server" ) 20, and a first communication path 41 (communications lines 40). The mobile phone 10 and the image processing server 20 are interconnected each other via the first communication path 41 over the communications lines 40 (for example, the Internet; see FIG. 2), so that they can communicate with each other.

The mobile phone (first equipment) 10 of course has a construction for realizing its original function of making a call, and beside, it also has a camera 11, an image data transmitting unit 12, a resulting data receiving unit 13, and a resulting data inputting unit 14.

The camera (image inputting unit) 11 is provided as an image inputting device allowing the mobile phone 10 to obtain a picture image. The camera 11 takes , for example, a document image, and the obtained data is captured in the mobile phone 10 in the form of image data. This camera 11 is formed of, for example, a CMOS (Complementary Metal Oxided Semiconductor) or a CCD (Charge Coupled Device) sensor.

The image data transmitting unit 12 transmits the image data obtained by the camera 11 to the image processing server 20 over the first communication path 41. The resulting data receiving unit (processed data receiving unit) 13 receives image data, which has undergone image processing, from the image processing server 20 over the first communication path 41. The resulting data inputting unit 14 writes/inputs the processed image data, which has been received by the resulting data receiving unit 13, to a memory or the like (not show). At that time, provided the mobile phone 10 inherently has a function for receiving/transmitting image data, it is possible to utilize such an image data transceiving function to realize the functions of the image data transmitting unit 12 and the resulting data receiving unit 13.

In the meantime, the image processing server (second equipment) 20 has an image data receiving unit 21, an image data processing unit 22, and an resulting data transmitting unit 23.

The image data receiving unit 21 receives image data from the mobile phone 10 over the first communication path 41.

The image data processing unit 22 performs predetermined processing on the image data received by the image data receiving unit 21. In a first through fourth embodiments of the present invention, the image data processing unit 22 serves as an orientation correcting device which corrects the directional orientation of document image data containing a character.

The image data transmitting unit (processed data transmitting unit) 23 returns the processed image data, which results from the processing of the image data processing unit 22, back to the mobile phone 10 over the first communication path 41.

Referring now to FIG. 2, an operation of the image data processing system of the first embodiment with the aforementioned construction will be described hereinbelow. Note that the image data receiving unit 21 and the resulting data transmitting unit 23 of the image processing server 20 is omitted from the illustration in FIG. 2.

The following description will be made on the assumption that the camera 11 obtains a vertically oriented rectangular picture image. As shown in FIG. 2, if the camera 11 takes a picture image of a rectangular visiting card (on which characters are printed horizontally), such image data as is shown in the left end of FIG. 2 is obtained. That is, in order to obtain a picture image of the whole of the visiting card, the visiting card, which is originally printed in horizontal orientation, is turned by 90 degrees before its image is taken by the camera 11. If the thus obtained picture image is viewed on a screen image, the characters are of course kept turned by 90 degrees, and it is thus impossible to view an erect image of the characters.

In a first to fourth embodiments of the present invention, the image processing server 20 (image data processing unit 22) corrects the directional orientation of such document image data, whose image has been obtained positionally incorrectly, so that an erect image of the document image data can be shown on a screen image (this processing will be hereinafter called "orientation correction processing").

Here will be given a description of the operation of an image data processing system of the first embodiment, following the flow of image data.

Image data of a visiting card is obtained by a camera 11, and is then transmitted from the mobile phone 10 (image data transmitting unit 12) to an image processing server 20 over a communication path 41 of communications lines 40. At that time, along with the image data, the destination address (of the mobile phone 10) to which the resulting data (processed image data) of image processing by the image processing server 20 will be returned, is also sent to the image processing server 20.

On the image processing server 20, an image data receiving unit 21 receives the image data from the mobile phone 10, and the image data is then temporarily stored in an image data storage (not shown). On the thus stored image data, the image data processing unit 22 performs orientation correction processing, as predetermined image data processing.

During the orientation correction processing, similar procedures to those that have been already been described with reference to FIG. 10 (a technique disclosed in Japanese Patent Application Publication No. HEI 11-316798) are carried out. That is, the characters contained in the object image data are recognized (step 1); the directional orientation of the recognized characters is detected (step 2); and the orientation of the character image is converted/corrected to comply with the user's intention (step 3). With this orientation correction processing (steps 1 through 3), the image data of the landscape visiting card, which has been read in vertical orientation, is automatically converted into an erect image, as shown on the right end of FIG. 2.

The orientation-corrected image data is transmitted from the image processing server 20 (resulting data transmitting unit 23) to the mobile phone 10 over an first communication path 41 of the communications lines 40. At that time, the resulting data transmitting unit 23 refers to the above-mentioned destination address, which has been received together with the object image data, and then transmits the processed image data to a mobile phone 10 corresponding to the destination address.

On the mobile phone 10, the resulting data receiving unit 13 receives the processed image data from the image processing server 20, and then the resulting data inputting unit 14 writes/inputs the processed image data to a memory or the like. The thus obtained processed data is shown on the screen display of the mobile phone 10. thereby making it possible for the user to view the erected image of the visiting card.

According to the image data processing system of the first embodiment of the present invention, image data obtained by a mobile phone 10 with poor ability is transferred to an image processing server 20 with high ability, where the image data is then processed. In this manner, since the image processing server 20 takes in charge of time-consuming image data processing, which would have taken the mobile phone 10 a significant time to complete, it is possible for the present system to perform the complicated image data processing at increased speed, thereby reducing the time required for such processing.

Further, the image data (processed image data), on which the image processing server 20 has performed complicated image data processing, is returned to the mobile phone 10. In this case, it is possible for the mobile phone 10 to obtain such processed image data more rapidly, even taking into account the time for communicating with the image processing server 20, in comparison with a case where the mobile phone 10 executes such processing by itself . As a result, the mobile phone 10 is significantly improved in user convenience.

Here will be given a concrete example. The amount of image data of a CIF (Common Intermediate Format;352x288-pixel)-sized monochrome picture image that is obtained with an ordinary type of camera-equipped mobile phone 10, is 12 KB, while the rate of the first communication path 41 is 48 KB/second at the maximum. Such a camera-equipped mobile phone 10 is normally equipped with an MPU of a CPU speed of 30 MHz or so, while the image processing server 20 normally operates at a CPU speed of 1 GHz or greater, thereby realizing the ability about 30 times as great as that of the mobile phone 10. The rate of correcting document orientation is approximately in proportion to the ability of the processor. Accordingly, the processing which takes the MPU of a mobile phone 3 seconds to complete, will take the image processing server 20 only 0.1 seconds.

That is, it takes 3 seconds for the mobile phone 10 to correct the orientation of image data obtained by the camera 11. Meanwhile, it only takes a total of 0.6 seconds to complete the same orientation correction processing, if the image data is transferred to the image processing server 20, where the processing is performed, and the processed image data is returned to the mobile phone 10 (image data communication between the mobile phone 10 and the image processing server 20 takes 0.5 second; the image data processing by the server 20 takes 0.1 seconds). In other words, the image processing server 20 realizes a five-fold speedup of the image data processing.

### [2] Second Embodiment:

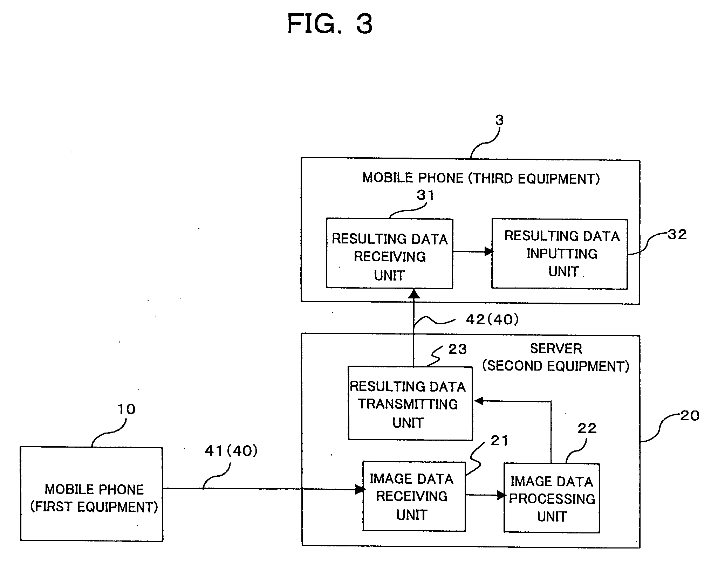

FIG. 3 shows a functional structure of an image data processing system according to a second embodiment of the present invention. Like reference numbers designate similar parts or elements throughout several views of the present embodiment and the conventional art, so their detailed description is omitted here.

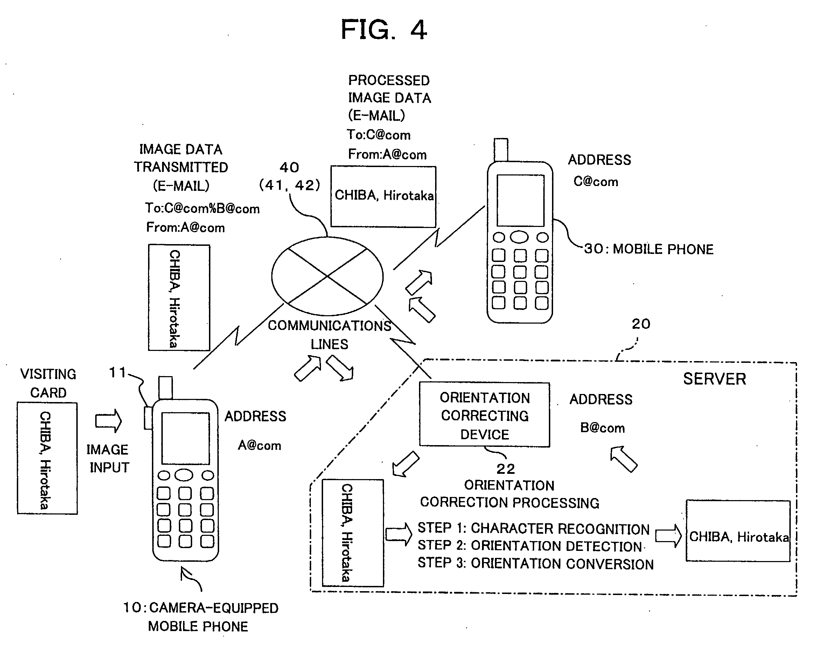

Referring now to FIG. 3, the image data processing system of the second embodiment has, as in the case of the first embodiment, a mobile phone 10, an image processing server 20, and a first communication path 41 (communications lines 40). The image data processing system additionally includes another mobile phone 30 and a second communication path 42 (communications lines 40), and the mobile phone 30 and the image processing server 20 are interconnected each other via the second communication path 42 over the communications lines 40 (see FIG. 4), so that they can communicate with each other.

In addition to a construction for realizing its original function of making a call, the mobile phone (third equipment) 30 also has a resulting data receiving unit (processed data receiving unit) 31 and a resulting data inputting unit 32. The resulting data receiving unit (processed image data receiving unit) 31 receives image data (processed image data), which has undergone image processing, from the image processing server 20 over the second communication path 42. The resulting data inputting unit 32 writes/inputs the processed image data, which has been received by the resulting data receiving unit 31, into a memory or the like (not show). At that time, provided the mobile phone 30 inherently has a function for receiving/transmitting image data, it is possible to utilize such an image data transceiving function to realize the function of the resulting data receiving unit 31.

It is to be noted that the mobile phone 10 and the image processing server 20 has similar constructions to those in the first embodiment, and that in the second embodiment, the resulting data receiving unit 13 and the resulting data inputting unit 14 can be omitted on the mobile phone 10.

Further, the resulting data transmitting unit (processed data transmitting unit) 23 of the image processing server 20 transfers the processed image data, which results from the processing of the image data processing unit 22, to the mobile phone 30 over the second communication path 42.

The image processing server 20 of the second embodiment serves as a mail server (second equipment) which transfers e-mail with an attachment of image data, from a mobile phone 10 to another mobile phone 30. Conversely, the image processing server 20 is an ordinary type of mail server equipped with an image data processing unit 22, and hence, the image processing server 20 will be called the "mail server 20" in the following description.

Referring now to FIG. 4, an operation of the image data processing system of the second embodiment having the aforementioned construction will be described hereinbelow. Note that the image data receiving unit 21 and the resulting data transmitting unit 23 of the mail server 20 is omitted from the illustration in FIG. 4.

The following description of the second embodiment will be given on the assumption that e-mail with image data of a visiting card attached thereto, which image data is obtained by the camera 11, is sent from a mobile phone 10 (address-A@com) to another mobile phone 30 (address-C@com) via a mail server 20 (address-B@com).

The image data-attached e-mail (hereinbelow, also simply called "mail" ) is transmitted from the mobile phone 10 (image data transmitting unit 12) to the image processing server 20 over a communication path 41 of the communications lines 40. At that time, together with the image data, the address (address-C@com) of the mobile phone 30 to which the resulting data (processed image data) of image processing by the mail server 20 will be transferred, is also sent to the mail server 20.

On the mail server 20, an image data receiving unit 21 receives the image data-attached mail from the mobile phone 10, and the image data is then temporarily stored in an image data storage (not shown). As in the case of the first embodiment, the image data processing unit 22 performs orientation correction processing on the image data, as predetermined image data processing.

The mail server 20 then attaches the processed image data to the mail, and then, by serving its original function(resulting data transmitting unit 23) as a mail server, the mail server 20 transmits the mail to the mobile phone 30 over the second communication path 42 of the communications lines 40.

On the mobile phone 30, the resulting data receiving unit 31 receives the e-mail with the processed image data attached thereto, from the mail server 20, and the resulting data inputting unit 32 then writes/inputs the processed image data to a memory or the like. The thus obtained processed image data is shown on the screen display of the mobile phone 30, thereby making it possible for the user to view an erected image of the visiting card.

According to the image data processing system of the second embodiment of the present invention, the image data processing unit 22 of the mail server 20 takes in charge of time-consuming image data processing, which would have taken the mobile phone 10 or the mobile phone 30 a significant time to complete because of its poor ability. As in the case of the first embodiment, it is thus possible to perform complicated image data processing at increased speed, thereby reducing the time required for such processing.

Moreover, in the second embodiment, if the user of the mobile phone 10 would like the processed image data to be directed to the mobile phone 30, the image data can be sent from the server 20 to the mobile phone 30 directly, without necessity for the mobile phone 10 to interpose between the server 20 and the mobile phone 30, by receiving the image data from the mail server 20 and then transmitting the image data to the mobile phone 30. Accordingly, it is no longer required that a huge amount of processed image data is returned from the server 20 to the mobile phone 10, nor is required that the returned image data is sent to the mobile phone 30. Consequently, the process of transceiving processed image data is successfully simplified, and it is possible to transmit the processed image data to the mobile phone 30 at an increased rate, so that the mobile phone 10 or the mobile phone 30 is improved in user convenience.

Here will be given a concrete example. As has been described in the first embodiment, the amount of image data of a CIF-sized (352x288-pixel) monochrome picture image obtained with an ordinary type of camera-equipped mobile phone 10, is 12 KB, while the rate of the communication paths 41 and 42 is 48 KB/second at the maximum. Transmission between any two of the devices thus takes 0.25 seconds.

Provided, according to the system of the first embodiment, the mobile phone 10 sends an e-mail with processed image data attached thereto, which data has been obtained by the server 20, to the mobile phone 30, the data communication between the mobile phone 10 and the server 20 takes 0.5 seconds, while transmission from the mobile phone 10 to the mobile phone 30 takes 0.25 second. Consequently, the image data transceiving takes a total of 0.75 seconds.

In the meantime, provided e-mail with processed image data attached thereto is directly sent from the server 20 to the mobile phone 30 in the system of the second embodiment, the transmission takes only 0.5 seconds, thereby reducing the time required for the inter-device communication to a 2/3 of that of the first embodiment.

### [3] Third Embodiment:

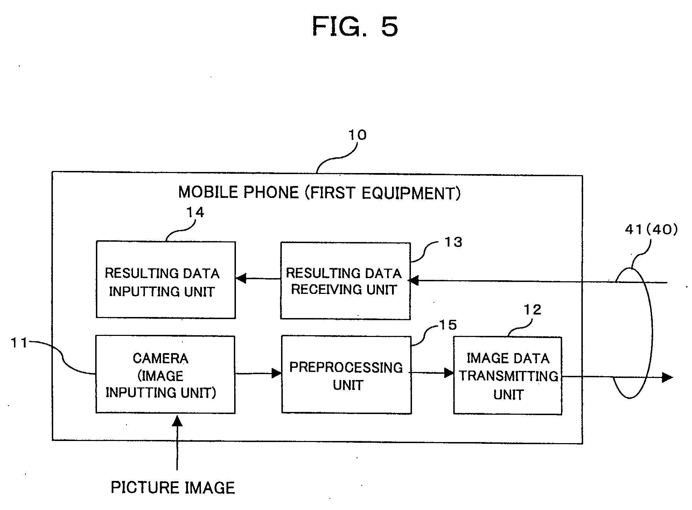

FIG. 5 shows a functional structure of first equipment (mobile phone 10) for use in an image data processing system according to a third embodiment of the present invention. Like reference numbers designate similar parts or elements throughout several views of the present embodiment and the conventional art, so their detailed description is omitted here.

The image data processing system of the third embodiment has a construction similar to that of the first or the second embodiment, with the exception of a mobile phone 10 (first equipment) whose construction is slightly different from that of the first and second embodiments.

Specifically, as shown in FIG. 5, the mobile phone 10 of the third embodiment has a preprocessing unit 15 provided between the camera 11 and the image data transmitting unit 12. The preprocessing unit 15 performs preprocessing on image data which has been obtained by the camera 11, before the image data processing unit 22 performs its processing on the image data.

The preprocessing unit 15 carries out, of a series of image data processing that are carried out by the image data processing unit 22 of the server 20, a rather simple preprocessing which causes relatively light load (for example, isolated spot removing processing/noise removing processing which was executed in step 1, during the character recognition processing).

As a result, since the server 20 of the third embodiment receives image data which has undergone the isolated spot-removing processing (binary-coded), the image data processing unit 22 performs the foregoing orientation correction processing on the image data from which isolated spots have already been removed.

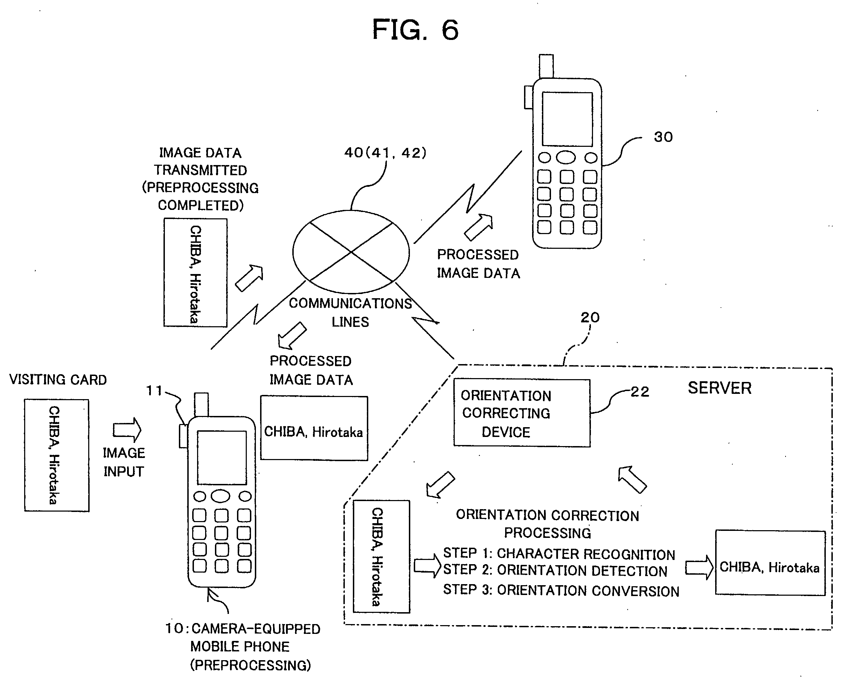

As shown in FIG. 6, the image data processing system of the third embodiment having such a construction as has been described above, operates in a manner similar to the system of the first or the second embodiment, with the exception of the removing of isolated spots which is carried out by the preprocessing unit 15 of the mobile phone 10. Hence, here will be omitted a detailed description of the operation of the system of the third embodiment.

In this manner, an image data processing system of the third embodiment guarantees similar effects and profits to those of the first and the second embodiments. Moreover, since relatively light-load processing, such as the removing of isolated spots, is performed on the mobile phone 10, it is possible to reduce the load of image data processing onto the server 20 (image data processing unit 22). In particular, even if numerous requests for image data processing are concentrated at the server 20, it is possible to reduce/lighten the load on the server 20 effectively according to the third embodiment, thereby speeding up the processing of the server 20.

Here will be given a concrete example. The proportion of the isolated spot removing processing to the whole of the orientation correction processing is about 5%. During actual operation of the present system, a lot of processing requests concurrently reach the server 20 from separate mobile phones 10. For example, using a server 20 that is capable of coping with 20 requests concurrently, if the removing of isolated spots is previously completed on the mobile phone 10, it allows the server 20 to process 21 requests simultaneously.

### [4] Fourth embodiment:

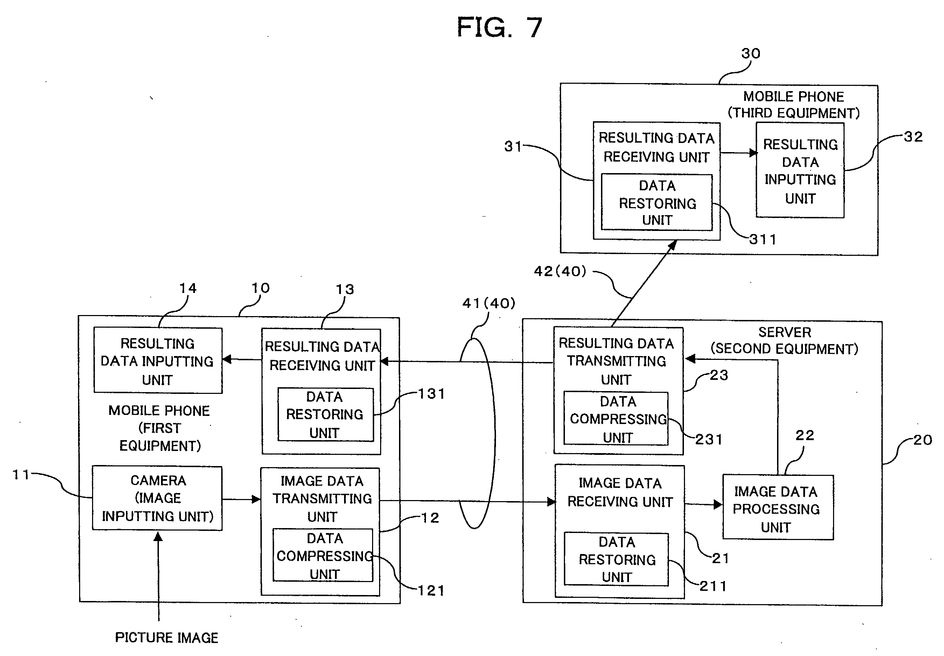

FIG. 7 shows a functional structure of an image data processing system according to a fourth embodiment of the present invention. Like reference numbers designate similar parts or elements throughout several views of the present embodiment and the conventional art, so their detailed description is omitted here.

The image data processing system of the fourth embodiment has a construction similar to that of the first or the second embodiment, with the following exceptions: the mobile phone 10 has a data compressing unit 121 provided to the image data transmitting unit 12 and a data restoring unit 131 provided to the resulting data receiving unit 13; the server 20 has a restoring unit 211 provided to the image data receiving unit 21 and a resulting data transmitting unit 23 provided to the data compressing unit 231; and the mobile phone 30 has a data restoring unit 311 provided to the resulting data receiving unit 31.

The data compressing unit 121 compresses image data before it is transmitted from the image data transmitting unit 12 to the server 20, and the restoring unit 211 restores the compressed image data, which has been received by the image data receiving unit 21 from the mobile phone 10, into original form. In the mean time, the data compressing unit 231 compresses processed image data, which has undergone image data processing on the server 20, before the data is transmitted from the resulting data transmitting unit 23 to the mobile phone, 10 and 30, and the data restoring unit 131 restores such compressed processed image data, which has been received by the resulting data receiving unit 13 from the server 20, into original form. Likewise, the data restoring unit 311 restores such compressed processed image data, which has been received by the resulting data receiving unit 31 from the server 20, into original form.

Accordingly, in the image data processing system of the fourth embodiment, image data is communicated in compressed form across communications lines 40 (communication path, 41 and 42).

At that time, the data compressing unit, 121 and 231, compresses image data in, for example, a BMC (BitMap Compression)-coding format, as is disclosed in Japanese Patent Application Publication No. HEI 8-51545. This BMC-coding format requires no special hardware tool for transferring bitmap data, and it also allows efficient data compression even with simple algorisms.

In the fourth embodiment, as in the case of the third embodiment, the mobile phone 10 may have such a preprocessing unit 15 as has been described above.

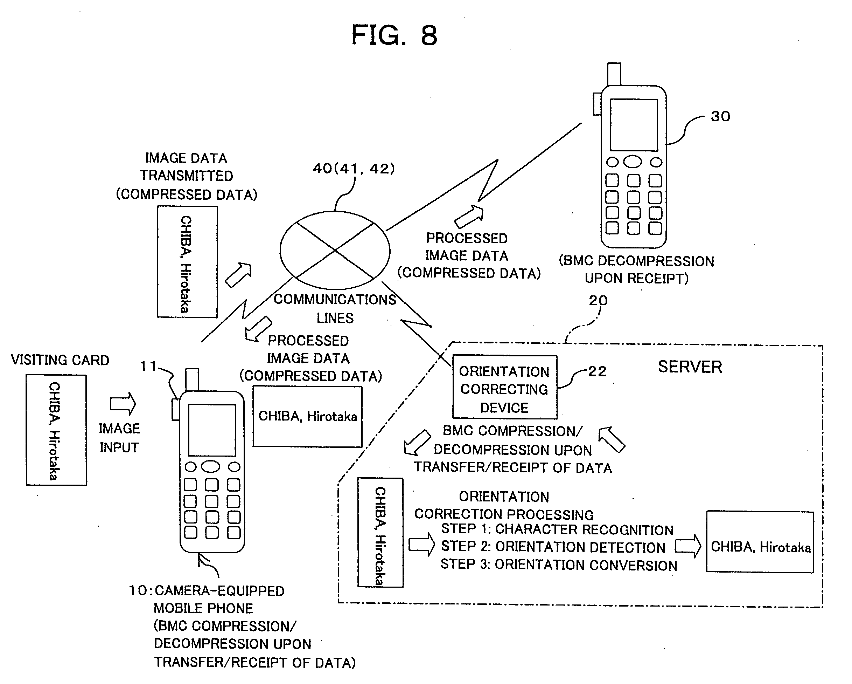

As shown in FIG. 8, the image data processing system of the fourth embodiment having such a construction as has been described above, operates in a manner similar to the system of the first or the second embodiment, with the exception that image data is transferred over the communications lines 40 (communication path, 41 and 42) in compressed form. Here will thus be omitted a detailed description of the operation of the system of the fourth embodiment.

In this manner, an image data processing system of the fourth embodiment guarantees similar effects and profits to those of the first and the second embodiments. Moreover, partly since image data transmission between the mobile phone 10 and the server 20 is carried out in compressed form, and partly since processed image data transmission between the server 20 and the mobile phone, 10 and 30, is carried out also in compressed form, it is possible reduce the amount of data transmitted between the mobile phone 10 and the server 20, and also between the server 20 and the mobile phone 30, so that the time required for communication therebetween can be reduced, thereby improving user convenience.

Here will be given a concrete example. With use of a BMC-coding format as a data compression system, the amount of character image data can be compressed to a 1/20 of the original data, so that it takes only 0.025 seconds, or a 1/20 of the duration required in the first embodiment, to transmit the BMC-format data. Even if the communication path, 41 and 42, has a communication rate as small as 1.2 KB/second, the time duration required for data communication is still reduced from 10 seconds to 0.5 seconds, a 1/20 of that required in case of non-compressed data. In this manner, it is possible to realize high-speed inter-device communication over the communication path, 41 and 42.

### [5] Other Modifications:

It is to be noted that the present invention should by no means be limited to the above-illustrated embodiment, and various changes or modifications may be suggested without departing from the gist of the invention.

For example, the foregoing description of the embodiments was made on examples where an image input unit is realized by a camera. The present invention should by no means be limited to this example, and other types of image inputting devices, such as a scanner, are also applicable.

Further, in the foregoing embodiments , a mobile phone is employed as first and third equipment of the present invention. The present invention should by no means be limited to this, and any other types of equipment with an image inputting function and a communication function are also applicable. The application of the present invention to such equipment with poor ability will realize similar effects and profits to those of the foregoing embodiments.

Still further, in the above embodiments, the image data processing performed by the server 20 was to correct the orientation of image data, and the preprocessing performed by the mobile phone 10 was to remove isolated spots from the image data, and the compression format employed was a BMC-coding format. The present invention, however, should by no means be limited to such example description.

## Claims

1. An image data processing system, comprising first equipment (10) and second equipment (20), communicably interconnected each other with a first communication path (41),
said first equipment (10), including:
an image inputting unit (11) for obtaining image information in the form of image data; and
an image data transmitting unit (12) for transmitting the image data, which has been obtained by said image inputting unit (11), to said second equipment (20) over said first communication path (41), and
said second equipment (20), including:
an image data receiving unit (21) for receiving the image data, which has been transmitted over said first communication path (41), from said first equipment (10); and
an image data processing unit (22) for processing the image data, which has been obtained by said image data receiving unit (21).

2. An image data processing system as set forth in claim 1,
wherein said second equipment (20) further includes a processed image data transmitting unit (23) for transmitting such processed image data, which has been processed by said image data processing unit (22), to said first equipment (10) over said first communication path (41), and
wherein said first equipment (10) further includes a processed image data receiving unit (13) for receiving said processes image data, which has bee transmitted over said first communication path (41), from said second equipment (20).

3. An image data processing system as set forth in claim 1, further comprising third equipment (30), communicably connected with said second equipment (20) via a second communication path (42),
said second equipment (20) further including a processed image data transmitting unit (23) for transmitting such processed image data, which has been processed by said image data processing unit (22), to said third equipment (30) over said second communication path (42), and
said third equipment (30) including a processed image data receiving unit (31) for receiving said processed image data, which has bee transmitted over said second communication path (42), from said second equipment (20).

4. An image data processing system as set forth in any one of claim 1 through claim 3,
wherein said first equipment (10) further includes a preprocessing unit (15) for performing preprocessing on the image data, which has been obtained by said image inputting unit (11), before said image data is processed by said image data processing unit (22), and
wherein said image data transmitting unit (12) of said first equipment (10) transmits the image data, which has been obtained by said image inputting unit (11) and then preprocessed by said preprocessing unit (15), to said second equipment (20) over said first communication path (41).

5. An image data processing system as set forth in claim 4, wherein said preprocessing unit (15) removes an isolated spot on the image data, as said preprocessing.

6. An image data processing system as set forth in claim 2,
wherein said image data transmitting unit (12) of said first equipment (10) serves a function for compressing the image data to be transmitted to said second equipment (20),
wherein said image data receiving unit (21) of said second equipment (20) serves a function for restoring the compressed image data, which has been received from said first equipment (10) over said first communication path (41), to its original form.

7. An image data processing system as set forth in claim 2 or claim 6,
wherein said processed image data transmitting unit (23) of said second equipment (20) serves a function for compressing the processed image data,
wherein said processed image data receiving unit (13) of said first equipment (10) serves a function for restoring the compressed image data, which has been received from said second equipment (20) over said first communication path (41), to its original form.

8. An image data processing system as set forth in claim 3,
wherein said processed image data transmitting unit (23) of said second equipment (20) serves a function for compressing the processed image data,
wherein said processed image data receiving unit (31) of said third equipment (30) serves a function for restoring the compressed image data, which has been received from said second equipment (20) over said second communication path (42), to its original form.

9. An image data processing system as set forth in any one of claim 1 through claim 8, wherein said image data processing unit (22) corrects a directional orientation of the image data, if the image data contains a character, as said processing.

10. An image data processing system as set forth in any one of claim 1 through claim 9, wherein said first equipment (10) is a mobile phone having an image inputting function which serves as said image inputting section.

11. An image processing server, communicably connected with a mobile phone (10) which is equipped with an image inputting unit (11), said server comprising:
an image data receiving unit (21) for receiving image data from said image inputting unit (11) of said mobile phone (10); and
an image data processing unit (22) for processing the image data, which has been obtained by said image data receiving unit (21).

12. An image processing server as set forth in claim 11, further comprising a processed image data transmitting unit (23) for transmitting such processed image data, which has been processed by said image data processing unit (22), to said mobile phone (10).

13. An image processing server as set forth in claim 11, further comprising a processed image data transmitting unit (23) for transmitting such processed image data, which has been processed by said image data processing unit (22), to terminal equipment (30) other than said mobile phone (10).

14. An image processing server as set forth in any one of claim 11 through claim 13, wherein said image data processing unit (22) corrects a directional orientation of the image data, if the image data contains a character, as said processing.
